**Europäisches Patentamt**

**European Patent Office**

**Office européen des brevets**

(11) Numéro de publication: **0 124 426**
**B1**

(12) **FASCICULE DE BREVET EUROPÉEN**

(45) Date de publication du fascicule du brevet:
29.06.88

(51) Int. Cl.⁴: **B 60 G 17/04,** F 16 F 15/04,
B 60 K 5/12

(21) Numéro de dépôt: 84400803.7

(22) Date de dépôt: 20.04.84

(54) Support-moteur à dépression.

(30) Priorité: 22.04.83 FR 8306612

(43) Date de publication de la demande:
07.11.84 Bulletin 84/45

(45) Mention de la délivrance du brevet:
29.06.88 Bulletin 88/26

(84) Etats contractants désignés:
DE FR GB IT

(56) Documents cité:
FR-A-1 259 261
FR-A-1 518 317
FR-A-2 046 191
FR-A-2 065 191
FR-A-2 143 292
US-A-3 572 676
US-A-3 690 689

(73) Titulaire: Caoutchouc Manufacturé et Plastiques Société Anonyme dite:, 143 bis rue Yves Le Coz B.P. 554, F-78005 Versailles Cedex (FR)

(72) Inventeur: Bechu, Jean- Pierre, "Les Poissons" 20 ter, rue de Bezons, F-92400 Courbevoie (FR)

EP 0 124 426 B1

## Description

L'invention concerne le domaine des isolations antivibratoires de machines lorsque l'on dispose commodément d'une prise de dépression, elle est donc plus particulièrement applicable aux supports élastiques de moteurs à aspiration naturelle sur les voitures et utilitaires fonctionnant à l'essence, mais aussi de moteurs Diesel équipés d'une pompe à vide.

L'amélioration du confort dans l'habitacle des véhicules conduit à rechercher, pour les supports moteurs, des flexibilités de plus en plus élevées, afin d'améliorer le filtrage des hautes fréquences. Ceci a pour conséquence des risques d'entrée en résonance de la masse suspendue, risques rencontrés en certaines circonstances ondulatoires sur bonnes routes, connues sous le terme de "hachis". Un amortissement des débattements millimétriques devient nécessaire, et divers artifices, en général hydrauliques, cherchent à assurer celui-ci sans nuire au filtrage à plus haute fréquence. La cale de caoutchouc de formes diverses est la solution quasi-générale pour la réalisation des supports de groupes motopropulseurs; pour obtenir des flexibilités sous charge de plusieurs millimètres, une disposition courante utilise un ou des cones de révolution à paroi épaisse de caoutchouc, travaillant en cisaillement, combiné à une compression, ce qui permet de constituer une enceinte à volume variable où un transfert de liquide entre deux chambres est exploité pour l'amortissement des oscillations de grande amplitude.

Pour remédier aux inconvénients des solutions hydrauliques, l'invention propose une solution pneumatique évitant de ce fait les risques de fuites, de gel du fluide et permettant un allègement de l'ensemble de suspension.

L'invention est une application pneumatique d'un tel dispositif, formé d'une enceinte à volume variable fermé par une paroi épaisse de caoutchouc adhérisé à des armatures de renfort caractérisée en ce qu'elle supporte une contrainte supérieure à la charge suspendue. Celle-ci est en effet accrue du fait que règne sous la membrane une dépression modérée, provoquant un équilibre statique plus bas que la position de repos de la membrane sous la charge. La dépression qui règne dans la chambre est modulée par la mise en communication rapide de l'enceinte avec l'un ou l'autre de deux extravolumes de part et d'autre d'une faible course morte encadrant la position d'équilibre.

Vers l'accroissement de charge d'une part, un volume limité préalablement remis à la pression atmosphérique à travers un filtre à faible section de passage, ou vers la réduction de charge, d'autre part, un autre volume limité, préalablement soumis à la dépression maximale du moteur, permettent que s'exerce, lors de l'ouverture de l'une ou l'autre des dites communications rapides, une force accélératrice de correction du déplacement limitée à une valeur acceptable pour le confort de l'habitacle, par exemple 0,2 fois la valeur de la pesanteur sur le groupe moteur.

Si un cycle oscillatoire d'amplitude notable tend à se produire, un rétablissement progressif de la pression atmosphérique d'une part, de la dépression maximale d'autre part dans chacun des volumes fournira un travail positif s'opposant aux déplacements, apportant un amortissement actif qui peut facilement dépasser l'énergie perturbatrice à l'origine du débattement.

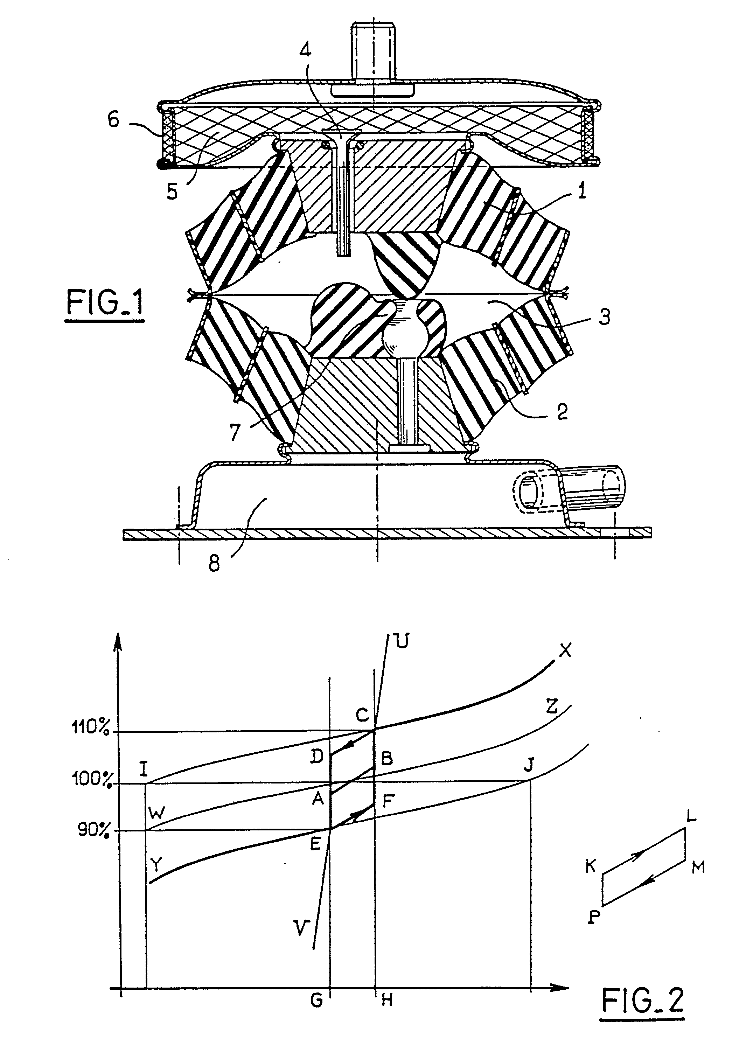

On se rapportera, pour un exemple non limitatif de réalisation pratique à la figure 1 où deux ressorts coniques têtebêche (1) et (2) enferment une enceinte (3) où règne la pression d'équilibre à faible dépression. En cas de compression du support élastique, une valve (4) ouvre la communication avec une chambre (5) où règne la pression atmosphérique, grâce à une mise à l'air libre lente a travers un filtre (6) apte à retenir par la même occasion les poussières qu'il serait dangereux d'entraîner jusqu'à la prise de dépression du carburateur. Ce filtre (6) est réalisé, par exemple, en feutre porté par un grillage ou encore en matériau cellulaire déformable avec faible fuite répartie dans toute sa surface.

Ainsi la réduction brutale de la dépression à une valeur précalculée exerce un rappel vers une position d'équibre plus haute du groupe moteur.

Au contraire, en cas de détente des ressorts (1) et (2), une valve (7) réalisée par moulage dans les pièces de caoutchouc met en communication l'enceinte (3) avec une chambre (8) préalablement soumise à la dépression du moteur grâce à une valve antiretour. Le volume est calculé pour accroître la dépression de façon à rappeler aussitôt l'équilibre vers une position plus basse du groupe moteur. Un faible débit de rétablissement de la dépression dans la chambre 8 doit éviter des oscillations entretenues entre les deux positions d'équilibres précitées, représentées en I et J sur la figure 2.

Le diagramme de fonctionnement est représenté sur un graphique où les abscisses sont les déplacements verticaux, et les ordonnées la force exercée par le support élastique sur la masse suspendue.

A l'intérieur des limites GH où s'ouvrent les communications avec l'un ou l'autre des extravolumes, la masse d'air enfermée dans le volume de travail (3) procure à l'ensemble, du fait de son petit volume, une rigidité représentée par le segment AB lorsqu'on est à l'équilibre avec la charge nominale, et qui se déplace parallèlement en DC ou en EF si la masse d'air a été accrue ou réduite par la communication.

Au delà de l'ouverture de l'une ou l'autre communication dans l'hypothèse où la régulation rétablissant les pressions antérieures ne se fait que lentement par rapport à un cycle d'oscillations, l'équilibre est décrit par la courbe polytropique du volume total CX ou EY. Dans le cas contraire d'une régulation de niveau agissant immédiatement, les forces en jeu sont représentées par CU ou EV, avec des accélérations correctrices du déplacement exagérées par rapport au confort requis.

3

A grand débattement du moteur, le confort dans la caisse est ainsi équivalent à celui d'une suspension pneumatique de grande flexibilité qui suivrait le diagramme WZ parallèle aux deux polytropiques CX et EY. La différence de comportement est le travail actif absorbé dans un cycle. Si la communication se referme en H, la détente dans l'enceinte (3) suit la pente relativement raide CD, au contraire, la compression à partir de G suit la pente EF jusqu'à ce que l'autre communication se produise.

Le travail fourni contre la pesanteur est représenté par l'aire du parallélogramme EFCD parcouru dans le sens négatif, au contraire d'un cycle d'hystérésis transformant en chaleur cette énergie perdue en suivant un parallélogramme KLMP, représentatif d'un amortissement à friction (ou une ellipse pour un amortissement visqueux). Dans un mouvement périodique sinusoïdal, ces deux diagrammes se retrouveraient en opposition de phase. Si le rétablissement des pressions n'a pas le temps de se produire, le parallélogramme va se réduire jusqu'au segment AB, et un réglage expérimental de gicleurs permet de choisir le compromis d'amortissement voulu sans accroître les accélérations exercées.

**Revendications**

1. Support élastique de moteur disposant d'une source de dépression, formé d'une enceinte à volume variable (3) fermée par une paroi épaisse de caoutchouc adhérisé à des armatures de renfort, caractérisé en ce que la dite paroi supporte une contrainte supérieure à la charge suspendue, sous l'effet d'une dépression modérée qui provoque un équilibre statique plus bas que la position de repos de la paroi chargée, et en ce que cette dépression est modulée par la mise en communication rapide, de part et d'autre d'une faible course morte (GH) encadrant la position d'équilibre, avec l'un ou l'autre de deux extravolumes dont l'un (5) est préalablement remis à la pression atmosphérique par un filtre à faible section de passage (6), l'autre (8) étant soumis à la dépression maximale du moteur, de façon à ce que s'exerce, dès la mise en communication, une force accélératrice de correction du déplacement, limitée à une valeur acceptable pour le confort de l'habitacle du véhicule.

2. Dispositif, selon la revendication 1, caractérisé en ce que l'enceinte est formée de deux parois coniques (1) et (2) dont les flexibilités sont mises en série pour porter la charge suspendue.

3. Dispositif, selon l'une des revendications 1 ou 2, caractérisé en ce que la ou les valves de communication rapide (7) et (4) entre les volumes sont intégrées, par fabrication, à l'intérieur de l'enceinte à volume variable.

4. Dispositif, selon l'une des revendications 1 à 3, caractérisé en ce que l'un ou les deux extravolumes (5) et (8) ont une paroi commune avec une armature rigide de l'enceinte déformable et sont superposés au dit support élastique.

5. Dispositif, selon l'une quelconque des revendications 1 à 4, caractérisé en ce que le filtre de mise à la pression atmosphérique (6) est réalisé en matériau déformable tel qu'un élastomère cellulaire avec faible fuite répartie dans toute sa paroi.

**Patentansprüche**

1. Elastiche Aufhängung eines Motors (Auflast), der über eine Unterdruckquelle verfügt, bestehend aus einer Kammer (3) variablen Volumens, die von einer dicken Gummiwand begrenzt ist, die mit Verstärkerungsarmierungen verklebt ist, dadurch gekennzeichnet, daß die Aufhängung einer die Auflast übersteigenden Belastung unterworfen ist und zwar unter Wirkung eines (in der Kammer herrschenden) geringen Unterdruckes, wodurch ein statisches Gleichgewicht geschaffen ist, in dem die Auflast tiefer liegt, als es der Ruhelage der Aufhängung unter Wirkung der Auflast allein entspricht, und daß der Unterdruck in der Kammer moduliert wird, indem sie beidseits eines die Gleichgewichtslage enthaltenden geringfügigen Totganges (GH) mit einem von zwei Zusatzvolumen (5, 8) in Verbindung gebracht wird, von denen das eine (5) zuvor über einen Filter (6) mit kleinen Durchtrittsquerschnitten auf Atmosphärendruck gebracht wurde, während das andere (8) dem maximalen Unterdruck des Motors ausgesetzt ist. wodurch vom Moment des Inverbindungbringens an die der Verlagerung der Auflast entgegenwirkende Kraft durch eine Korrekturkraft vergrößert wird, die auf einen für den Komfort des Fahrgastraumes des Fahrzeugs annehmbaren Wert begrenzt ist.

2. Einrichtung nach Anspruch 1, dadurch gekennzeichnet, daß die Kammer (3) aus zwei konischen Wänden (1 und 2) gebildet ist, deren Flexibilität für die Aufhängung der Auflast in Reihe geschaltet ist.

3. Einrichtung nach Anspruch 1 oder 2, dadurch gekennzeichnet, daß das oder die Ventile (4 und 7) zur schnellen Verbindung der Kammer (3) mit den Zusatzvolumen (5, 8) bei der Herstellung in das Innere der Kammer (3) variablen Volumens integriert sind.

4. Einrichtung nach einem der Ansprüche 1 bis 3, dadurch gekennzeichnet, daß ein oder beide Zusatzvolumen (5 und 8) eine mit einem starren Beschlagteil versehene Wand mit der Kammer (3) variablen Volumens gemeinsam haben und mit der elastischen Aufhängung übereinander gestapelt sind.

3

5

5. Einrichtung nach einem der Ansprüche 1 bis 4, dadurch gekennzeichnet, daß der Filter (6) für die Zufuhr des Atmosphärendruckes aus einem verformbaren Material besteht, wie z. B. einem porösen Elastomer mit über seine Wand verteilten Durchlässen geringen Durchtrittsquerschnittes.

Claims

1. Resilient engine mounting having a source of negative pressure formed by a variable volume enclosure (3) closed by a thick rubber wall bonded to reinforcing members, characterised in that the said wall bears a higher stress than load supported, under the action of a moderate negative pressure which causes a lower static equilibrium than the rest position of the loaded wall, and in that this negative pressure is modulated by being placed in rapid communication at either side of a small dead region (GH) encompassing the equilibrium position, with the one or the other of two extra volumes, of which the one (5) is initially reset at atmospheric pressure via a filter (6) having a small passage cross-section, the other (8) being submitted to the maximum negative pressure of the engine, in such a manner that immediately upon placing in communication, there is exercised an accelerating force for correction of the displacement, which is limited to an acceptable value for the comfort of the passenger compartment of the vehicle.

2. Device according to claim 1, characterised in that the enclosure is formed by two conical walls (1) and (2) of which the flexibilities are coupled in series to carry the load suspended.

3. Device according to one of claims 1 or 2, characterised in that the valve or valves (7) and (4) for rapid communication between the volumes are integrated during production within the variable volume enclosure.

4. Device according to one of claims 1 to 3, characterised in that one or both extra volumes (5) and (8) has or have a wall in common with a rigid member of the deformable enclosure and are superposed on the said resilient support.

5. Device according to any one of claims 1 to 4, characterised in that the filter for establishing atmospheric pressure (6) is produced from a deformable material such as a cellular elastomer with slight leakage distributed throughout its wall.

4

FIG.1

FIG.2